# EUROPÄISCHE PATENTANMELDUNG

(11) **EP 1 277 701 A2**
(43) Veröffentlichungstag der Anmeldung: **22.01.2003**
(21) Anmeldenummer: 02015789.7
(22) Anmeldetag: 15.07.2002
(51) Int. Cl.: C01B 15/029, B01J 8/04

(54) **Verfahren und Vorrichtung zur Herstellung von Wasserstoffperoxid aus Wasserstoff und Sauerstoff**

(30) Priorität: 16.07.2001 DE 10134470
(71) Anmelder: BASF AKTIENGESELLSCHAFT, 67056 Ludwigshafen (DE)
(72) Erfinder: Fischer, Martin, 67071 Ludwigshafen (DE); Butz, Thomas, 68309 Mannhaim (DE); Masonne, Klemens, 67098 Bad Dürckheim (DE)
(74) Vertreter: Thalhammer, Wolfgang, Dr.

(57) **Zusammenfassung**

Die vorliegende Erfindung betrifft ein Verfahren zur Herstellung einer wässrigen und/oder alkoholischen Wasserstoffperoxid-Lösung durch Umsetzung von Wasserstoff und Sauerstoff im Rieselbettreaktor (1) an einem geträgerten edelmetallhaltigen Katalysator (3a,3b), das dadurch gekennzeichnet ist, dass die scheinbare Strömungsrichtung des Gasstroms und die scheinbare Strömungsrichtung des flüssigen Stroms nicht parallel zueinander verlaufen. Die scheinbare Strömungsrichtung des Gasstroms verläuft bevorzugt radial von der Längsachse zum Umfang des Reaktors. Das Verfahren erlaubt hohe Gasdurchsätze bei geringem Druckabfall.

## Beschreibung

Die vorliegende Erfindung betrifft ein Verfahren zur Herstellung einer wässrigen und/oder alkoholischen Wasserstoffperoxid-Lösung durch Umsetzung von Wasserstoff und Sauerstoff an einem edelmetallhaitigen stationären Katalysator.

Die Synthese von Wasserstoffperoxid aus Wasserstoff und Sauerstoff an heterogenen Katalysatoren ist mehrfach beschrieben worden. So beschreibt die EP-A 0 579 109 die Direktsynthese von Wasserstoffperoxid in einem Rieselfestbettreaktor. Hierbei liegt der Katalysator als feste Schüttung im Reaktor vor. Ein Wasserstoff und Sauerstoff enthaltender Gasstrom und ein flüssiger wässriger Strom werden im Gleichstrom von oben nach unten durch den Reaktor vorbeigeführt.

Der limitierende Faktor für die Bildungsgeschwindigkeit von Wasserstoffperoxid ist bei einer gegebenen Katalysatoraktivität die an der Oberfläche des Katalysators vorhandene Menge an Reaktionsgasen. Diese erfährt zum einen dadurch eine Einschränkung, dass aus sicherheitstechnischen Gründen der Wasserstoffanteil die untere Explosionsgrenze von Wasserstoff/Sauerstoff-Gemischen von 4 Vol.-% nicht überschreiten sollte. Zum anderen ist die Löslichkeit von Wasserstoff im flüssigen Reaktionsmedium, das die Katalysatorteilchen als dünner Film umgibt, gering. Um trotz dieser Umstände eine wirtschaftlich vertretbare Produktausbeute zu erzielen, wird deshalb die Direktsynthese von Wasserstoffperoxid unter hohem Gasdruck durchgeführt. Entlang der Katalysatorschüttung fällt jedoch der Gasdruck auf Grund viskoser Kräfte zwischen fester und fluider Phase, d. h. zwischen der Katalysatoroberfläche und der Gasphase bzw. der flüssigen Phase, mit zunehmender Entfernung von der Gaseinlassstelle stark ab. Um diesen Druckabfall zu kompensieren, muss eine unwirtschaftlich hohe Kompressionsleistung für die Gasversorgung aufgebracht werden.

Daher liegt der vorliegenden Erfindung die Aufgabe zu Grunde, ein Verfahren zur Herstellung von Wasserstoffperoxid durch Umsetzung von Wasserstoff und Sauerstoff bereitzustellen, das bei hoher Gasbelastung und gleichzeitig geringem Druckverlust durchgeführt werden kann.

Diese Aufgabe wird durch ein Verfahren gelöst, bei dem man
a) in einem Reaktionsraum einen stationären Katalysator anordnet,
b) durch den Reaktionsraum einen flüssigen Strom führt, der Wasser und/oder ein C₁-C₄-Alkanol umfasst und
c) gleichzeitig einen Gasstrom, der Wasserstoff und Sauerstoff umfasst, durch den Reaktionsraum leitet, wobei die scheinbare Strömungsrichtung des Gasstroms und die scheinbare Strömungsrichtung des flüssigen Stroms nicht parallel zueinander verlaufen.

Die scheinbare Strömungsrichtung oder Brutto-Strömungsrichtung soll als die Richtung, die dem kürzest möglichen Weg vom Eintritt des Gasstroms bzw. des flüssigen Stroms in den Reaktionsraum zum Austritt entspricht, verstanden werden. Bei mikroskopischer Betrachtung ist die tatsächliche Wegstrecke der Gas- oder Flüssigkeitsmoleküle in der Regel komplexer, da der direkte Weg z. B. durch Katalysatorteilchen blockiert ist und die Moleküle sich um die Katalysatorteilchen herum bewegen müssen. Dies kann im Extremfall je nach Teilchenform zur Umkehrung der Strömungsrichtung um 180° in sehr kleinen Beobachtungsabschnitten führen. Für die vorliegende Betrachtung sollen jedoch die durch die Katalysatorteilchen erzwungene Richtungsänderungen außer Acht gelassen werden.

Erfindungsgemäß sollen die scheinbare Strömungsrichtung des Gasstroms und des flüssigen Stroms nicht parallel zueinander, d. h. nicht im Gleich- oder Gegenstrom, verlaufen. Die scheinbaren Strömungsrichtungen schließen vielmehr einen Winkel zueinander ein, der vorzugsweise 15 bis 165° beträgt. Besonders bevorzugt stehen sie im Wesentlichen senkrecht aufeinander.

Zweckmäßigerweise führt man den flüssigen Strom in Richtung der Schwerkraft durch den Reaktionsraum und führt den Gasstrom über die den Reaktionsraum begrenzenden Seitenwände ein. Nicht umgesetzte Bestandteile des Gasstroms werden nach dem Passieren des Reaktionsraums auf der gegenüberliegenden Seitenwand abgezogen. In den Seitenwänden sind zur Zufuhr bzw. zum Abführen von Gasströmen zumindest in Teilbereichen gasdurchlässige Öffnungen ausgespart. Die Öffnungen können makroskopische Öffnungen, z. B. Löcher oder Schlitze oder mikroskopische Kanäle eines gasdurchlässigen porösen Materials, z. B. eines Sintermetalls oder einer gasdurchlässigen Keramik, sein. Die einzelnen Öffnungen in den Seitenwänden können mit individuellen Gaszufuhr- und -abfuhrleitungen verbunden sein. Praktischer ist es jedoch, wenn die Seitenwände den Reaktionsraum von wenigstens einem gaszuführenden Kompartiment und wenigstens einem gasabführenden Kompartiment des Reaktors abtrennen.

Der Gasdruck im gaszuführenden Kompartiment nimmt mit zunehmendem Abstand vom Einspeisepunkt ab. Um eine gleichmäßige Gaszufuhr an jeder Stelle des Reaktionsraums zu gewährleisten, kann man den Widerstand, den die den Reaktionsraum begrenzende Seitenwand gegen den Gasdurchtritt bietet, annähernd proportional zum abnehmenden Gasdruck verringern. Dies kann man z. B. durch Vergrößerung der Anzahl und der Fläche der Öffnungen oder durch eine zunehmende Porosität der Trennwand in Strömungsrichtung des Gases im gaszuführenden Kompartiment erreichen.

In bevorzugten Ausführungsformen ist der Reaktionsraum in einem hochzylindrischen Reaktor angeordnet, wobei die scheinbare Strömungsrichtung des flüssigen Strom im Wesentlichen parallel zur Längsachse des Reaktors und die scheinbare Strömungsrichtung des Gasstroms im Wesentlichen senkrecht zur Längsachse verläuft. Zweckmäßigerweise verläuft die scheinbare Strömungsrichtung des Gasstroms in einer Richtung radial von der Längsachse zum Umfang des Reaktors. Unter einem hochzylindrischen Reaktor soll ein solcher verstanden werden, dessen Länge größer ist als der Durchmesser seines Querschnitts. Der Schlankheitsgrad, d. h. der Koeffizient aus Länge und Breite, beträgt dabei vorzugsweise wenigstens 2, besonders bevorzugt wenigstens 3 und insbesondere 3,5 bis 20.

Der hochzylindrische Reaktor ist vorzugsweise durch konzentrisch angeordnete zylindrische Einbauten in drei Räume unterteilt. Der zentrale zylindrische Raum dient als gaszuführendes Kompartiment. Der diesen ringförmig umschließende zweite Raum umfasst den eigentlichen Reaktionsraum. Der äußere Ringraum zwischen Reaktionsraum und Reaktormantel dient der Gasabführung. Es ist auch denkbar, den Gasstrom durch den äußeren Ringraum zuzuführen und über den zentralen zylindrischen Raum abzuführen, bevorzugt wird jedoch die Variante, bei der das Reaktionsgas radial von innen nach außen strömt.

In den Trennwänden zwischen dem zentralen zylindrischen Raum und dem Reaktionsraum bzw. zwischen dem Reaktionsraum und dem äußeren Ringraum sind wie vorstehend erläutert zumindest in Teilbereichen gasdurchlässige Öffnungen ausgespart. Die Strömungsrichtung des Gases im inneren Gaszuführungsraum kann von oben nach unten oder vorzugsweise umgekehrt von unten nach oben verlaufen.

In bevorzugten Ausführungsformen führt man den Gasstrom daher über ein im Wesentlichen entlang der Längsachse des Reaktors verlaufendes Rohr in den Reaktor und leitet ihn durch auf Höhe des Reaktionsraums in dem Mantel des Rohrs ausgesparte Öffnungen in den Reaktionsraum ein. Nicht umgesetzte Bestandteile des Gasstroms führt man vorzugsweise durch Öffnungen, die in der den Reaktionsraum umgebenden Trennwand auf Höhe der Öffnungen des Rohrmantels des zuführenden Rohres ausgespart sind, aus dem Reaktionsraum ab.

Bei dem stationären Katalysator handelt es sich um einen stationär in der Reaktionszone angeordneten heterogenen Katalysator, geeigneterweise um ein Bett eines teilchenförmigen Katalysators, eine strukturierte Packung oder einen monolithischen Katalysator. Als Katalysatoren eignen sich sämtliche dem Fachmann bekannten edelmetallhaltigen Katalysatoren, die die Umsetzung von Wasserstoff und Sauerstoff zu Wasserstoffperoxid katalysieren, vorzugsweise solche, deren aktive Komponente wenigstens ein Metall der Platingruppe, insbesondere Palladium bzw. Kombinationen von Palladium und Platin, enthält. Gegebenenfalls können sie Beimengungen weiterer Metalle, wie Rhodium, Iridium, Osmium, Ruthenium, Rhenium, Gold, Kupfer, Cobalt, Wolfram, Molybdän, Holmium, Zinn oder von Nichtmetallen, wie Phosphor oder Bor, enthalten.

Die aktive Masse der Katalysatoren ist vorzugsweise auf metallischen oder nichtmetallischen, porösen oder nichtporösen Trägern aufgebracht. Nichtporöse Träger sind bevorzugt. Sie weisen in der Regel eine BET-Oberfläche von weniger als 5 m²/g, vorzugsweise weniger als 0,2 m²/g, auf. Die Abscheidung des Edelmetalls auf dem Träger zur Herstellung des Katalysators erfolgt vorzugsweise stromlos, beispielsweise durch Tränken oder Benetzen des Trägers mit einer Lösung, die das Edelmetallsalz und ein Reduktionsmittel enthält.

Die Träger können beliebige Formen aufweisen, wie Bleche, Drähte, Gitter, Netze, Gewebe oder Formkörper, wie Raschigringe, Sattelkörper, Drahtspiralen oder Maschendrahtringe. Bei dem Träger kann es sich auch um einen monolithischen Träger handeln, d. h. einen Festkörper, der von einer Vielzahl von Durchströmungskanälen durchzogen ist und dadurch eine große Oberfläche aufweist.

Metallische Träger können aus beliebigen Metallen oder Metalllegierungen bestehen, vorzugsweise aus Edelstahl.

Zu den geeigneten nichtmetallischen Trägern zählen Aktivkohle, Graphit, mineralische Werkstoffe, Kunststoffe oder eine Kombination davon. Geeignete mineralische Werkstoffe sind natürliche oder synthetische Mineralien, Gläser oder Keramiken, insbesondere wasserunlösliche Oxide, Mischoxide, Sulfate, Phosphate und Silikate der Erdalkalimetalle, Aluminium, Silicium, Zinn, Titan oder Zirkonium. Geeignete Kunststoffe sind natürliche oder synthetische Hochpolymere.

Als besonders geeignete Träger haben sich Kugeln oder Pellets aus Steatit, Aluminiumoxid, Siliciumdioxid, Aktivkohle, Graphit, Glas oder Edelstahl erwiesen.

Bevorzugt eingesetzte Katalysatoren umfassen als aktive Komponente Palladium oder eine Kombination von Palladium und Platin auf einem nichtmetallischen nichtporösen Träger.

Bevorzugt werden teilchenförmige Katalysatoren verwendet, die als feste Schüttung einsetzbar sind. Die Teilchengröße liegt im Allgemeinen in einem Bereich von 0,01 bis 5 mm, insbesondere im Bereich von 0,05 bis 3 mm. Eine geeignete Trägerform sollte derart ausgewählt werden, dass der Druckabfall auf Grund viskoser Kräfte an der Phasengrenze zwischen fester Katalysatorphase und Gasphase bzw. flüssiger Phase nicht zu groß ist, gleichzeitig aber eine ausreichend große Reaktionsoberfläche, d. h. eine ausreichend große Kontaktfläche für die Reaktionsgase mit dem Katalysator, angeboten wird. Vorzugsweise beträgt der Druckabfall über den gesamten Reaktionsraum weniger als 5 bar, insbesondere weniger als 3 bar.

Der Edelmetallgehalt des Katalysator beträgt im Allgemeinen 0,001 bis 1,0 Gew.-% bezogen auf das Gewicht des Katalysators.

Der Reaktionsraum besteht entweder aus einem einzelnen zusammenhängenden Raum oder ist durch geeignete Einbauten in diskrete übereinander angeordnete Reaktionszonen unterteilt. Der stationäre Katalysator füllt dabei den Reaktionsraum bzw. die einzelnen Reaktionszonen im Wesentlichen aus.

Bei Verwendung übereinander angeordnete Reaktionszonen sammelt man mittels zwischen den Reaktionszonen angeordneter Böden den von einer Reaktionszone herablaufenden flüssigen Strom und verteilt ihn auf die darunter liegende Reaktionszone, z. B. mittels eines Verteilerorgans, wie einem Lochblech. Vorzugsweise wird der flüssige Strom auf den zwischen den einzelnen Reaktionszonen befindlichen Böden angestaut und über syphonartige Überläufe abgeführt. Die angestaute Flüssigkeit wirkt als Gassperre, die bewirkt, dass der gasförmige Strom nicht in eine benachbarte Reaktionszone strömt, sondern die Reaktionszone z. B. über die vorgesehenen Öffnungen in der Seitenwand verlässt.

Die im Reaktionsraum stattfindende Wasserstoffperoxidbildung ist exotherm, so dass sich der flüssige Strom beim Durchtritt durch den Reaktionsraum erwärmt. Wasserstoffperoxid ist temperaturempfindlich und eine zu starke Erwärmung des flüssigen Stroms ist daher zu vermeiden. Zur Verhinderung einer zu starken Erwärmung der flüssigen Phase kühlt man daher vorzugsweise den flüssigen Strom während seiner Passage durch den Reaktionsraum. Hierzu kann man in den Reaktionsraum zweckmäßigerweise Wärmetauscher einbauen. Die Wärmetauscher sind im Allgemeinen als Rohre oder Platten ausgestaltet, die von einem Kühlmedium durchströmt werden und im Kontakt mit dem flüssigen Strom stehen, indem der flüssige Strom beispielsweise über die Wärmetauscher herabläuft. Der Abstand zwischen zwei parallel angeordneten Kühlflächen kann beispielsweise 5 bis 500 mm, vorzugsweise 10 bis 200 mm, betragen. Die Wärmetauscher können dabei den gesamten Reaktionsraum durchziehen. Bei der Verwendung eines in einzelne Reaktionszonen aufgeteilten Reaktionsraums kühlt man den flüssigen Strom vorzugsweise zwischen den einzelnen Reaktionszonen, d. h. die Wärmetauscher sind zwischen den einzelnen Reaktionszonen angeordnet. Eine bevorzugte Ausgestaltungsform des letzten Falls besteht darin, dass die Wärmetauscher mit den vorstehend angesprochenen Böden zum Sammeln bzw. Anstauen des flüssigen Stroms eine integrale Einheit bilden oder mit diesen in wärmeleitender Verbindung stehen. Um einen besseren Wärmetransport zu gewährleisten, kann die Kühlzone auch mit zusätzlicher Katalysatorschüttung und/oder einer inerten Füllkörperschüttung ausgefüllt sein.

Das Molverhältnis von Sauerstoff zu Wasserstoff im zugeführten Gasstrom beträgt in der Regel 2:1 bis 1000:1, vorzugsweise 5:1 bis 100:1, besonders bevorzugt 20:1 bis 50:1. Neben den Reaktionsgasen Wasserstoff und Sauerstoff kann der Gasstrom auch wenigstens ein Inertgas, beispielsweise Stickstoff oder Argon, enthalten. Die Mitverwendung eines Inertgases kann vorteilhaft sein, um die bisweilen problematische Handhabung komprimierter hochsauerstoffhaltiger Gase zu vermeiden. Bei Mitverwendung eines Inertgases beträgt der Inertgasanteil geeigneterweise 50 bis 80 Vol.-%, vorzugsweise 60 bis 80 Vol.-% und insbesondere 70 bis 80 Vol.-%. Sauerstoff kann auch in Form von Luft eingesetzt werden. Der Anteil des Wasserstoffs sollte vorzugsweise an keiner Stelle der Reaktion die untere Explosionsgrenze von 4 Vol.-% überschreiten. Der den Reaktionsraum verlassende, an Sauerstoff und Wasserstoff verarmte Gasstrom wird im Allgemeinen erneut mit Sauerstoff und Wasserstoff versetzt und in den Reaktionsraum zurückgeführt. Enthält der Gasstrom ein Inertgas, so erfolgt die Ergänzung des durch die Reaktion verbrauchten Sauerstoffs und Wasserstoffs vorzugsweise durch im Wesentlichen reinen Sauerstoff bzw. Wasserstoff, um eine Aufpegelung des Inertgases im Gasstrom zu vermeiden.

Der flüssige Strom, der das an der Katalysatoroberfläche gebildete Wasserstoffperoxid löst und aus dem Reaktionsraum transportiert, enthält Wasser und/oder ein C₁-C₄-Alkanol, vorzugsweise nur Wasser. Wenn der flüssige Strom ein C₁-C₄-Alkanol umfasst, so enthält der Gasstrom vorzugsweise ein Inertgas. Zusätzlich enthält der flüssige Strom zweckmäßigerweise Stabilisatoren, die die Zersetzung des Wasserstoffperoxids verhindern sollen.

Als Stabilisatoren können Säuren verwendet werden, deren pKₐ₋Wert vorzugsweise kleiner als der der Essigsäure ist, insbesondere Mineralsäuren, wie Schwefelsäuren, Phosphorsäure, Bromwasserstoffsäure oder Salzsäure. Die Säurekonzentration beträgt in der Regel wenigstens 10⁻⁴ mol/l, vorzugsweise 10⁻³ bis 10⁻² mol/l. Weiterhin können auch geringe Mengen an Halogeniden, wie Chlorid oder Bromid, Pseudohalogeniden oder auch Formaldehyd in Konzentrationen von z. B. 1 bis 1000 ppm, vorzugsweise 3 bis 300 ppm zugesetzt werden. Besonders bevorzugt wird Bromwasserstoffsäure in Konzentrationen von 1 bis 2000 ppm, insbesondere von 10 bis 500 ppm, verwendet, da sie die Funktion von Säure und Halogenid in sich vereinigt.

Gewünschtenfalls kann man den flüssigen Strom auch mehrfach durch den Reaktionsraum führen, um höhere Wasserstoffperoxidkonzentrationen als bei einem einfachen Durchgang zu erzielen.

Die Flüssigkeitsbelastung (bezogen auf den horizontalen Querschnitt des Reaktionsraums) liegt im Allgemeinen im Bereich von 0,1 bis 100 m³/m²xh, bevorzugt im Bereich von 1 bis 50 m³/m²xh.

Das Verhältnis von Gasdurchsatz (unter Normbedingungen, d. h. bei 0 °C und 1013 mbar) und Flüssigkeitsdurchsatz beträgt im Allgemeinen 2 bis 20000, vorzugsweise 5 bis 15000 und besonders bevorzugt 5 bis 12000. Bei diesen Gas-flüssig-Verhältnissen bildet die Gasphase im Allgemeinen eine kohärente Phase im Reaktionsraum, während die Flüssigphase als dispergierte Phase, d. h. in Form feiner Tröpfchen, vorliegt.

Die Temperatur im Reaktionsraum beträgt im Allgemeinen 0 bis 80 °C, vorzugsweise 5 bis 70 °C und besonders bevorzugt 25 bis 60 °C. Der Gesamtdruck des Gasstroms beträgt im Allgemeinen 1 bis 300 bar, vorzugsweise 10 bis 200 bar und besonders bevorzugt 10 bis 80 bar.

Die Erfindung betrifft außerdem eine Vorrichtung, die speziell zur Durchführung des erfindungsgemäßen Verfahrens ausgestaltet ist. Sie umfasst einen im Wesentlichen zylindrischen Reaktor 1, ein im Wesentlichen entlang der Reaktorlängsachse in den Reaktor 1 führendes Gaszuführungsrohr 2, einen in dem Reaktor 1 angeordneten Reaktionsraum 3, der das Gaszuführungsrohr 2 zumindest in Teilabschnitten ringförmig umgibt, und der am Außenumfang von einer von einem Mantel 15 des Reaktors beabstandeten Trennwand 6 umgeben ist, wobei in dem Mantel 5 des Gaszuführungsrohrs 2 und in der Trennwand 6 auf Höhe des Reaktionsraums 3 gasdurchlässige Öffnungen 16a, 16b ausgespart sind, Mittel 14 zur Abfuhr von Gasen aus dem Reaktor, welche mit einem zwischen der Trennwand 6 und dem Mantel 15 des Reaktors 1 definierten Ringraum 4 kommunizieren, Mittel 10, 11 zur Beaufschlagung einer oberen Querschnittsfläche 17 des Reaktionsraums 3 mit Flüssigkeit, und Mittel 12 zum Abzug der nach Durchströmen des Reaktionsraums durch dessen untere Querschnittsfläche 18 austretenden Flüssigkeit.

Der Reaktionsraum der erfindungsgemäßen Vorrichtung ist vorzugsweise in mehrere, entlang der Längsachse des Reaktors angeordnete Reaktionszonen unterteilt. Zwischen aufeinander folgenden Reaktionszonen sind vorzugsweise Kühlzonen zur Kühlung der den Reaktionsraum durchströmenden Flüssigkeit angeordnet. Die gasdurchlässigen Öffnungen im Mantel des Gaszuführungsrohrs sind geeigneterweise als Schlitze ausgebildet, deren Fläche vorzugsweise in Strömungsrichtung des Gases zunimmt. Alternativ besteht der Mantel des Gaszuführungsrohrs zumindest in Teilbereichen aus einem porösen Material, dessen Porosität vorzugsweise in Strömungsrichtung des Gases zunimmt.

Die beigefügten Figuren und die folgenden Beispiele sollen der Veranschaulichung der Erfindung dienen.

Fig. 1 zeigt einen Längsschnitt durch einen zur Durchführung des erfindungsgemäßen Verfahrens geeigneten Reaktor.

Fig. 2 zeigt einen Querschnitt durch den Reaktor von Fig. 1.

Fig. 3 zeigt schematisch eine Anlage, die den Reaktor von Fig. 1 umfasst.

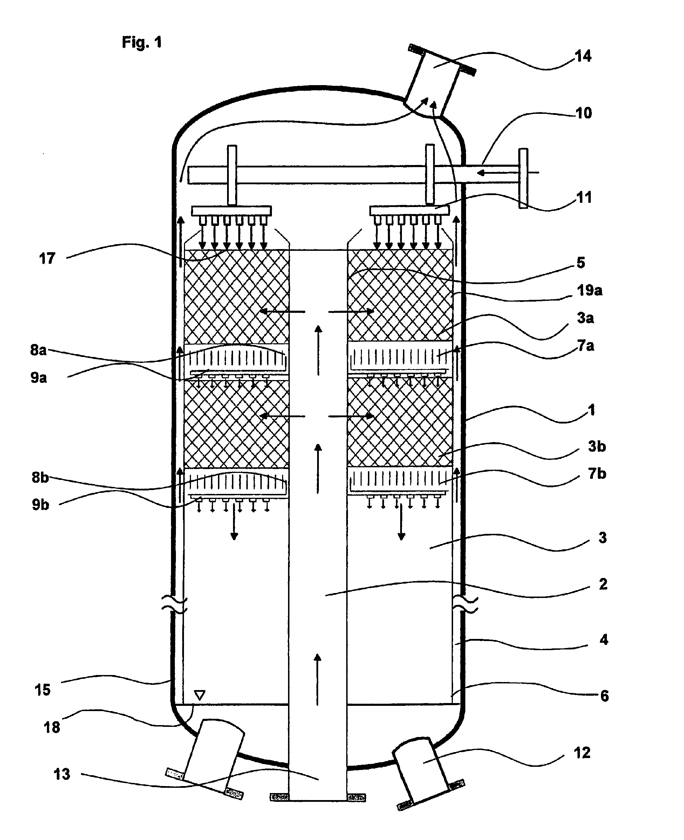

Gemäß Fig. 1 weist der Reaktor 1 ein zentrales Gaszuführungsrohr 2, einen Reaktionsraum 3 mit ringförmigem Querschnitt, der in mehrere Reaktionszonen 3a, 3b aufgeteilt ist, und einen äußeren Ringraum 4 zur Gasabfuhr auf. Der Mantel 5 des Gaszuführungsrohrs ist mit Öffnungen 19a, 19b versehen. Eine ebenfalls mit Öffnungen 19a, 19b versehene Trennwand 6 trennt den Ringraum 4 von dem Reaktionsraum 3 ab. Die Reaktionszonen 3a, 3b sind mit einer ungeordneten Schüttung eines teilchenförmigen geträgerten Edelmetallkatalysators gefüllt. Der flüssige Strom wird über die Leitung 10 in den Reaktor 1 eingeführt und mittels des Verteilerorgans 11 über den Querschnitt des Reaktionsraums verteilt. Der flüssige Strom verlässt den Reaktor 1 durch die Öffnungen 12 am Boden des Reaktors 1. Der Gasstrom wird über die Öffnung 13 in den Reaktor eingeführt, strömt durch das Gaszuführungsrohr 2 und tritt durch die Schlitze im Mantel 5 des Gaszuführungsrohrs 2 in die Reaktionszonen 3a, 3b. Das Gaszuführungsrohr 2 ist als Sackleitung ausgestaltet, d. h. es ist auf Höhe des oberen Rands der Katalysatorschüttung geschlossen. Nach dem Passieren der Reaktionszonen 3a, 3b tritt der Gasstrom durch die Öffnungen 19a, 19b der Trennwand 6, wird im Ringraum 4 gesammelt und verlässt den Reaktor 1 über die Öffnung 14. Zwischen zwei Reaktionszonen 3a, 3b ist jeweils eine Kühlzone 7a, 7b angeordnet, in der die herablaufende Flüssigkeit über einen Plattenkühler geführt wird. Die Flüssigkeit wird in den Kühlzonen 7a, 7b angestaut, verlässt diese über einen Überlauf 8a, 8b und wird mit Hilfe von Verteilerrohren 9a, 9b gleichmäßig über den Querschnitt der darunter liegenden Reaktionszone 3b verteilt.

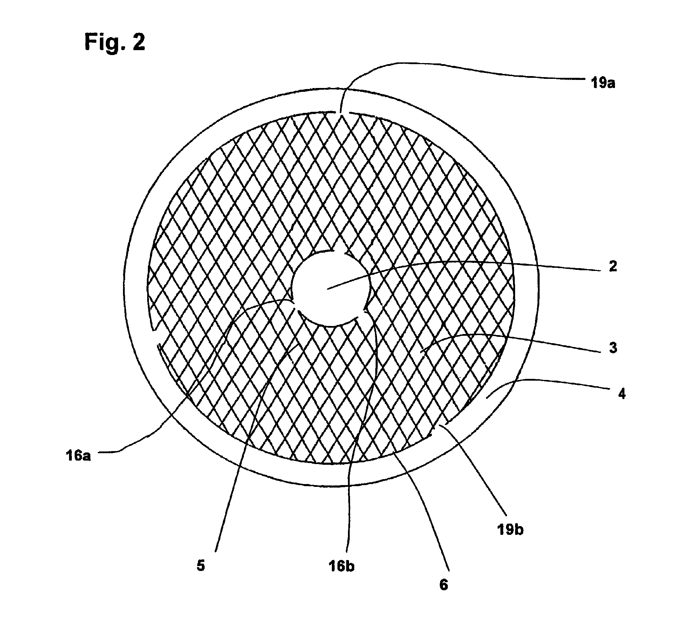

Fig. 2 zeigt das zentrale Gaszuführungsrohr 2, den Mantel 5 des Gaszuführungsrohrs, den Reaktionsraum 3, den Ringraum 4 und die Trennwand 6 im Querschnitt.

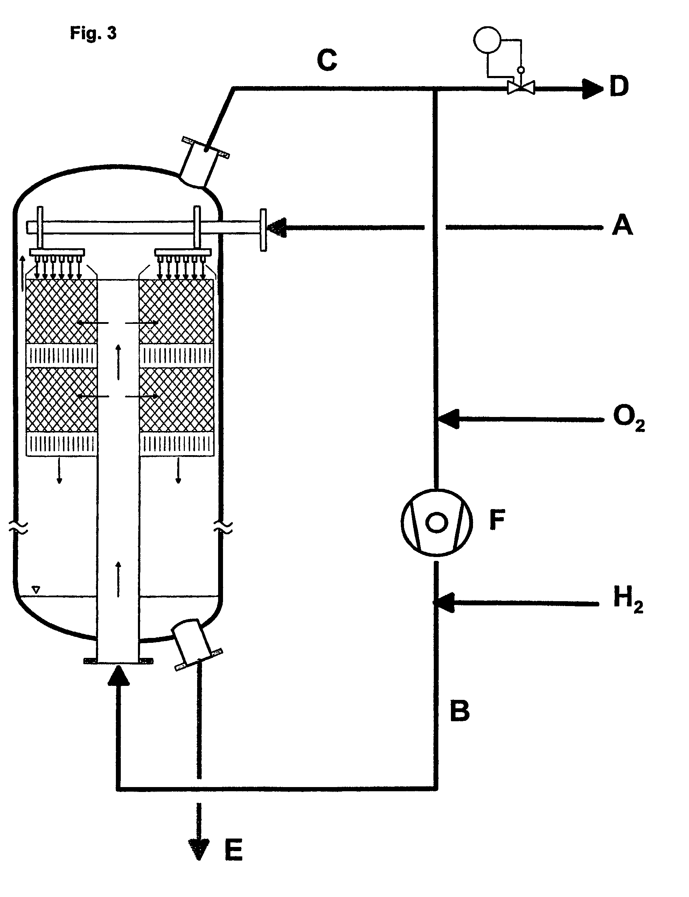

Fig. 3 zeigt schematisch eine zur Durchführung des erfindungsgemäßen Verfahrens geeignete Anlage, die neben dem Reaktor von Fig. 1 eine Kreisgasleitung B, C und eine Verdichterpumpe F sowie Mittel zum Einspeisen von Sauerstoff O₂ und Wasserstoff H₂ in die Kreisgasleitung B, C umfasst. Die Anlage weist außerdem eine Abluftöffnung D auf, über die druckgeregelt ein Teil des Kreisgases ausgeschleust werden kann, um eine Anreicherung von Inertgasen im Kreisgas zu verhindern. Ein flüssiger Strom A wird in den Reaktor eingespeist und eine Wasserstoffperoxidlösung E entnommen.

### Katalysatorherstellungsbeispiel 1:

Eine Portion mit einem Schüttvolumen von 5 m³ von Kugeln aus Steatit mit dem Durchmesser von 1,8 bis 2,2 mm wurde auf einer Kastennutsche mit einer Lösung von 15 kg Zinn(II)chlorid und 30 l Salzsäure in 3 m³ Wasser getränkt. Man ließ die Lösung durch die Kugeln sickern und wusch mit 5 m³ Wasser nach. Anschließend ließ man eine Lösung von 1000 g Palladiumchlorid und 5 1 konzentrierter Salzsäure in 3 m³ Wasser wiederum durch die Steatitkugeln sickern, fing das Filtrat auf und spülte wiederum mit Wasser nach. Der Vorgang wurde noch einmal wiederholt. Danach wurden die Kugeln über Nacht bei 50 °C und 100 mbar getrocknet.

Die so aktivierten Kugeln wurden dann in ein Doppelmantelrohr gefüllt, an das eine Pumpe zur Umwälzung von Flüssigkeit angeschlossen war. Der Doppelmantel konnte mit warmem Wasser beheizt werden. Nach Zugabe einer Lösung von 273 kg Natriumhypophosphit, 616 kg Ammoniumchlorid und 911 l 25%igem Ammoniak in 7350 l Wasser wurde unter Umpumpen auf 40 °C geheizt. Man fügte eine Lösung von 1226 g Natriumtetrachlorpalladat und 7 g Hexachlorplatinsäure in 120 l Wasser zu und wälzte die Mischung weiter um. Nach 20 min ließ man die Flüssigkeit ab und wusch den Katalysator mit Wasser salzfrei.

Der Vorgang wurde neunmal wiederholt, so dass am Ende 50 m³ Katalysator vorlagen.

### Katalysatorherstellungsbeispiel 2:

Der Katalysator wurde analog zu dem aus Beispiel 1 hergestellt, wobei jedoch die verwendeten Steatitkugeln einen Durchmesser von 1,0 bis 1,5 mm aufwiesen.

### Beispiel 1:

Man verwendete eine Anlage gemäß Fig. 3. Der Reaktor wies einen Außendurchmesser von 2,6 m und eine Höhe von 23,6 m auf. Der Reaktionsraum wies einen Außendurchmesser von 2,3 m, einen Innendurchmesser von 0,5 m auf und erstreckte sich oberhalb des Sumpfbereichs (1,9 m vom unteren Reaktorende) bis unterhalb des Kopfbereichs (2,2 m vom oberen Reaktorende). Das Katalysatorvolumen betrug 49 m3. Der Reaktionsraum umfasste 16 Reaktionszonen mit 15 dazwischen liegenden Kühlzonen. Die Reaktionszonen waren mit dem Katalysator gemäß Katalysatorherstellungsbeispiel 1 befüllt. Ein auf 43 °C vorgewärmter flüssiger Strom A wurde über einen Flüssigkeitsverteiler auf der Oberfläche der obersten Reaktionszone gleichmäßig verteilt. Die Flüssigkeit rieselte durch die oberste Reaktionszone und nahm das am Katalysator gebildete Wasserstoffperoxid auf. Die Flüssigkeit wurde in der ersten Kühlzone angestaut und durch indirekten Wärmetausch abgekühlt. Nach Verlassen der Kühlzone wurde die Flüssigkeit durch einen Lochboden auf die Katalysatorschüttung der folgenden Reaktionszone verteilt, durch die sie wiederum bis zur nächsten Kühlzone herabrieselte. Dieser Vorgang wiederholte sich über alle Reaktionszonen. Am Reaktorboden wurde der flüssige Wasserstoffperoxid-haltige Strom gesammelt und abgekühlt.

Die flüssige Phase erwärmte sich bei der Durchströmung der 0,75 m hohen Katalysatorringe jeweils um 12 °C, bevor sie in dem Kühlaggregat wieder auf 43 °C abgekühlt wurde. Das Verfahren wurde bei einem Nenndruck von 64 bar durchgeführt.

Das Sauerstoff und Wasserstoff enthaltende Reaktionsgas B wurde mittels des Verdichters F (einstufiger Turboverdichter mit 8500 m³/h Verdichterleistung (600 kW); pₑᵢₙ = 48 bar, Pₐᵤₛ = 50 bar) im Kreis geführt. In diesen Kreisstrom wurden Sauerstoff und Wasserstoff so nachdosiert, dass sich am Reaktoreingang ein konstanter H₂-Gehalt von 3,5 Vol.-% einstellte. Eine Druckhaltung in der Abgasleitung D, über die Inertgase ausgeschleust wurden, regelte den Reaktordruck. Das Kreisgas strömte in den Reaktor über die Einlassöffnung 13 in das zentrale Gaszuführungsrohr 2. Von dort strömte das Gas weiter auf Grund des von innen nach außen herrschenden Druckgefälles radial über den Mantel 5 des Gaszuführungsrohrs 2 durch die einzelnen Reaktionszonen quer zur herablaufenden Flüssigkeit in den äußeren Ringraum 4. In das Gaszuführungsrohr 2 und den Ringraum 4 können Verdrängerkörper eingebracht werden, um den Gastotraum zu verringern. Aus dem äußeren Ringraum 4 wurde das Gas in die obere Kalotte des Reaktors 1 geleitet und verließ den Reaktor 1 über die Austrittsöffnung 14.

Nachfolgend sind Parameter für die Wasserstoffperoxid-Synthese angegeben.

| Parameter: | |
|---|---|
| Kreisgasmenge | 478000 kg/h |
| H₂-Eingang | 3,5 Vol.-% |
| H₂-Ausgang | 2,5 Vol.-% |
| O₂-Zufuhr | 3346 Nm³/h |
| H₂-Zufuhr | 3450 Nm³/h |
| Abgas | 8,1 m³/h |
| Wässriger Zulauf | 35000 kg/h |
| Zusammensetzung: | wässrige Lösung mit 0,4 Gew.-% Schwefelsäure 0,1 Gew.-% Phosphorsäure 200 ppm Bromwasserstoffsäure |
| Zulauftemperatur | 43 °C |
| Produktstrom | 39610 kg/h wässrige Lösung mit 9,89 Gew.-% H₂O₂ |
| Produkttemperatur | 55 °C |

### Beispiel 2:

Beispiel 1 wurde wiederholt, wobei jedoch der Katalysator des Katalysatorherstellungsbeispiels 2 und als Kreisgasverdichter F ein einstufiger Turboverdichter mit 13000 m³/h effektiver Verdichterleistung (1000 kW) mit pₑᵢₙ = 47 bar und pₐᵤₛ = 50 bar verwendet wurden. Die Parameter für die Wasserstoffperoxid-Synthese mit diesem Katalysator sind in der folgenden Tabelle aufgeführt.

| Parameter: | |
|---|---|
| Kreisgasmenge | 723000 kg/h |
| H₂-Eingang | 3,5 Vol.-% |
| H₂-Ausgang | 2,5 Vol.-% |
| O₂-Zufuhr | 4960 Nm³/h |
| H₂-Zufuhr | 5193 Nm³/h |
| Abgas | 12,3 m³/h |
| Wässriger Zulauf | 47300 kg/h |
| Zusammensetzung: | wässrige Lösung mit 0,4 Gew.-% Schwefelsäure 0,1 Gew.-% Phosphorsäure 200 ppm Bromwasserstoffsäure |
| Zulauftemperatur | 43 °C |
| Produktstrom | 54126 kg/h wässrige Lösung mit 10,46 Gew.-% H₂O₂ |
| Produkttemperatur | 55 °C |

## Patentansprüche

1. Verfahren zur Herstellung von Wasserstoffperoxid durch Umsetzung von Wasserstoff und Sauerstoff, bei dem man
a) in einem Reaktionsraum wenigstens einen stationären edelmetallhaltigen Katalysator anordnet,
b) durch den Reaktionsraum einen flüssigen Strom führt, der Wasser und/oder ein C₁-C₄-Alkanol umfasst und
c) gleichzeitig einen Gasstrom, der Wasserstoff und Sauerstoff umfasst, durch den Reaktionsraum leitet,
**dadurch gekennzeichnet, dass** die scheinbare Strömungsrichtung des Gasstroms und die scheinbare Strömungsrichtung des flüssigen Stroms nicht parallel zueinander verlaufen.

2. Verfahren nach Anspruch 1, **dadurch gekennzeichnet, dass** der Reaktionsraum in einem hochzylindrischen Reaktor angeordnet ist, wobei die scheinbare Strömungsrichtung des flüssigen Stroms im Wesentlichen parallel zur Längsachse des Reaktors und die scheinbare Strömungsrichtung des Gasstroms im Wesentlichen senkrecht zur Längsachse verläuft.

3. Verfahren nach Anspruch 2, **dadurch gekennzeichnet, dass** die scheinbare Strömungsrichtung des Gasstroms in einer Richtung radial von der Längsachse zum Umfang des Reaktors verläuft.

4. Verfahren nach Anspruch 3, **dadurch gekennzeichnet, dass** man den Gasstrom über ein im Wesentlichen entlang der Längsachse des Reaktors verlaufendes Rohr in den Reaktor führt und durch auf Höhe des Reaktionsraums in dem Mantel des Rohrs ausgesparte Öffnungen in den Reaktionsraum einleitet.

5. Verfahren nach Anspruch 4, **dadurch gekennzeichnet, dass** man nicht umgesetzte Bestandteile des Gasstroms durch Öffnungen, die in einer den Reaktionsraum umgebenden Trennwand auf Höhe der Öffnungen des Rohrmantels ausgespart sind, aus dem Reaktionsraum abführt.

6. Verfahren nach einem der vorhergehenden Ansprüche, **dadurch gekennzeichnet, dass** der Gasstrom ein Inertgas enthält.

7. Verfahren nach einem der vorhergehenden Ansprüche, **dadurch gekennzeichnet, dass** man als stationären Katalysator wenigstens ein Bett eines teilchenförmigen Katalysators verwendet.

8. Verfahren nach Anspruch 7, **dadurch gekennzeichnet, dass** der Katalysator als aktive Komponente Palladium oder eine Kombination von Palladium und Platin auf einem nichtmetallischen, nichtporösen Träger umfasst.

9. Verfahren nach einem der vorhergehenden Ansprüche, **dadurch gekennzeichnet, dass** man den flüssigen Strom während seiner Passage durch den Reaktionsraum kühlt.

10. Verfahren nach einem der vorhergehenden Ansprüche, **dadurch gekennzeichnet, dass** der Reaktionsraum mehrere übereinander angeordnete Reaktionszonen umfasst.

11. Verfahren nach Anspruch 10, **dadurch gekennzeichnet, dass** man den flüssigen Strom zwischen den Reaktionszonen anstaut.

12. Verfahren nach Anspruch 10 oder 11, **dadurch gekennzeichnet, dass** man den flüssigen Strom zwischen den Reaktionszonen kühlt.

13. Vorrichtung zur Herstellung von Wasserstoffperoxid durch Umsetzung von Wasserstoff und Sauerstoff, insbesondere zur Durchführung des Verfahrens nach einem der Ansprüche 1 bis 12, mit einem im Wesentlichen zylindrischen Reaktor (1), einem im Wesentlichen entlang der Reaktorlängsachse in den Reaktor (1) führenden Gaszuführungsrohr (2), einem in dem Reaktor (1) angeordneten Reaktionsraum (3), der das Gaszuführungsrohr (2) zumindest in Teilabschnitten ringförmig umgibt, und der am Außenumfang von einer von einem Mantel (15) des Reaktors beabstandeten Trennwand (6) umgeben ist, wobei in dem Mantel (5) des Gaszuführungsrohrs (2) und in der Trennwand (6) auf Höhe des Reaktionsraums (3) gasdurchlässige Öffnungen (16a, 16b) ausgespart sind, Mitteln (14) zur Abfuhr von Gasen aus dem Reaktor, welche mit einem zwischen der Trennwand (6) und dem Mantel (15) des Reaktors (1) definierten Ringraum (4) kommunizieren, Mitteln (10, 11) zur Beaufschlagung einer oberen Querschnittsfläche (17) des Reaktionsraums (3) mit Flüssigkeit, und Mitteln (12) zum Abzug der nach Durchströmen des Reaktionsraums durch dessen untere Querschnittsfläche (18) austretenden Flüssigkeit.
